# EUROPÄISCHE PATENTSCHRIFT

(11) **EP 4 617 523 B1**
(45) Veröffentlichungstag und Bekanntmachung des Hinweises auf die Patenterteilung: **21.10.2026**
(21) Anmeldenummer: 24163357.7
(22) Anmeldetag: 13.03.2024
(51) Int. Cl.: F16F 9/18, F16F 9/32, F16F 9/44

(54) **STOSSDÄMPFER**
SHOCK ABSORBER
AMORTISSEUR DE CHOCS

(43) Veröffentlichungstag der Anmeldung: 17.09.2025
(73) Patentinhaber: Driveman GmbH, 58339 Breckerfeld (DE)
(72) Erfinder: Schnippering, Axel, 58339 Breckerfeld (DE); Wiegand, Andreas, 58579 Schalksmühle (DE)
(74) Vertreter: Patentanwälte Dörner & Kötter PartG mbB

(56) Entgegenhaltungen:
- DE-A1- 3 830 343
- DE-U1- 202023 104 556
- US-A- 4 936 423

## Beschreibung

Die Erfindung betrifft einen Stoßdämpfer nach dem Oberbegriff des Patentanspruchs 1.

Stoßdämpfer kommen beispielsweise bei Fahrwerken von Radfahrzeugen im Verbund mit einer Federung zum Einsatz, um Schwingungen der gefederten Masse zu dämpfen und dadurch schnell abklingen zu lassen. Korrekter wäre die Bezeichnung "Schwingungsdämpfer", da nicht der Stoß selbst, sondern dessen Wirkung beeinflusst wird. Stoßdämpfer dienen nicht dem Abfangen von Fahrbahnunebenheiten ins Fahrzeug eingeleiteten Stößen; die Aufgabe kommt der Federung zu. Stoßdämpfer haben die Aufgabe, Schwingungen des Fahrzeugaufbaus auf die Tragfederung oder auch Schwingungen der Räder auf die Reifenfederung zu dämpfen. Stoßdämpfer werden darüber hinaus in den unterschiedlichsten Bereichen eingesetzt, beispielsweise auch zur Schwingungsdämpfung von Maschinen oder Maschinenteilen, aber auch beispielweise im Möbelbau zum Dämpfen von Klappenbewegungen.

Bei Fahrzeugen liegt die primäre Aufgabe einer Feder innerhalb der Federung darin, der Masse des Fahrzeugaufbaus und des Fahrers entgegenzuwirken. Bei Zweiradfahrzeugen kommen regelmäßig Spiralfedern zum Einsatz. Die Federkraft einer Spiralfeder weist im Regelfall einen linearen Verlauf zum eingefederten Weg auf. Sie befindet sich zu Beginn einer Belastung in einem Ruhezustand und trägt das Gewicht von Fahrzeug und Fahrer. Eine niedrige Federkonstante (Federrate) sorgt für ein komfortables Fahrgefühl. Während des Federweges erhöht sich die Federkraft. Eine niedrige und komfortable Federkonstante ermöglicht aber ein schnelles und einfaches Durchschlagen. Eine hohe Federkonstante hingegen verringert das Durchschlagen, verschlechtert aber den Fahrkomfort. Leichte bis mittlere Stöße durch Straßenunebenheiten werden durch eine höhere Federkonstante weniger absorbiert, und über das Fahrzeug an den Fahrer durchgeleitet. Der Negativfederweg (Zugstufe) ergibt sich durch die Auflastung von Fahrer und Fahrzeug. Eine weitere Einfederung (Druckstufe) erfolgt durch die Einwirkungen der Fahrbahnunebenheiten. Über die Einstellung der Vorspannung der Spiralfeder kann das Fahrergewicht angepasst werden.

Durch eine Auslegung eines Stoßdämpfers in Zugrichtung und in Druckrichtung kann die Fahrdynamik und damit der Fahrkomfort beeinflusst werden. Innerhalb der Zugstufe eines Stoßdämpfers wird eine Fahrzeugfederung in dem Entspannungsvorgang innerhalb einer Schwingung gedämpft. In der Druckstufe erfolgt eine Dämpfung der Einfedergeschwindigkeit.

Stoßdämpfer sind im Fahrzeugbereich regelmäßig hydraulische Teleskopstoßdämpfer. Diese beruhen auf dem Prinzip, dass die Widerstandskraft gegen das Fließen des verdrängten Öls von der Fließgeschwindigkeit abhängt. In dem Stoßdämpfer wird Hydrauliköl über einen Kolben durch enge Bohrungen und Ventilsysteme gepresst. Die Dämpfungskraft, die der Dämpfergeschwindigkeit entgegenwirkt, steigt mit zunehmender Ein- bzw. Ausfedergeschwindigkeit des Kolbens an.

Nachteilig an den vorbekannten hydraulischen Stoßdämpfern (die, wie oben ausgeführt, tatsächlich Schwingungsdämpfer sind) ist, dass diese in einer Feder-Dämpfer-Anordnung die Stoßdämpfungswirkung der Feder in ihrem freischwingenden Mittelbereich durch ihre Schwingungsdämpfung beeinträchtigen. Dabei ist die Beeinträchtigung abhängig von der Geschwindigkeit des Kolbens.

Zur Behebung dieser Problematik wird in der DE 20 2023 102 485 U1 ein Stoßdämpfer vorgestellt, bei dem eine Beeinträchtigung der Stoßdämpfungswirkung einer angeordneten Federung in ihrem freischwingenden Mittelbereich vermieden ist. Hierzu ist in einem Zylinder eine Kolbenstange angeordnet, die durch diesen hindurchgeführt ist und die mit zwei beabstandet zueinander angeordneten Kolben versehen ist, in die umlaufend radial beabstandet zu der Kolbenstange Axialbohrungen eingebracht sind. An der jeweiligen Außenseite der Kolben ist jeweils eine Verschlussscheibe zum Verschließen der Axialbohrungen des zugeordneten Kolbens auf der Kolbenstange axial beweglich gelagert. Die Zylinderinnenwand weist zumindest bereichsweise einen sich in Axialrichtung stetig ändernden Durchmesser auf, wodurch eine wegabhängige Dämpfung bewirkt ist, über die eine Minimierung der Schwingungsdämpfung im freischwingenden Mittelbereich einer Federung ermöglicht ist. Dieser Stoßdämpfer hat sich in der Praxis bewährt und ermöglicht erstmals eine wegabhängige Dämpfung mit einer weitgehend ungedämpften Nulllage.

Dokument US4936423 offenbart einen Schwingungsdämpfer gemäß der Präambel von Anspruch 1.

Als vorteilhaft bei dem vorbekannten Schwingungsdämpfer hat sich weiterhin eine Ausgestaltung erwiesen, bei der die Zylinderinnenwand durch die Innenwand einer in den Zylinder eingebrachten Dämpferhülse gebildet ist, deren Außendurchmesser kleiner als der Innendurchmesser des Zylinderrohrs ist. Hierdurch kann sich die Dämpferhülse bei einem Druckanstieg im Zylinder erweitern, wodurch der Ringspalt zwischen Dämpferhülse und Kolben vergrößert ist. Durch den so vergrößerten Ringspalt kann das Fluid besser abfließen. Bei geeigneter Elastizität des Materials der Dämpferhülse verliert der Stoßdämpfer seine Abhängigkeit von der Geschwindigkeit und nimmt nahezu eine reine Wegabhängigkeit an.

Beim Einsatz eines solchen Stoßdämpfers hat sich jedoch gezeigt, dass bei hoher Belastung des Stoßdämpfers sowie bei unterschiedlichen Temperaturbedingungen Abweichungen des gewünschten Dämpfungsverhaltens auftreten können.

Hier will die Erfindung Abhilfe schaffen. Der Erfindung liegt die Aufgabe zu Grunde einen Stoßdämpfer bereitzustellen, bei dem auch bei hoher Arbeitsleistung sowie bei unterschiedlichen Temperaturen ein definiertes Dämpfungsverhalten erzielbar ist. Gemäß der Erfindung wird diese Aufgabe durch einen Stoßdämpfer mit den Merkmalen des kennzeichnenden Teils des Patentanspruchs 1 gelöst.

Mit der Erfindung ist einen Stoßdämpfer bereitgestellt, bei dem auch bei hoher Arbeitsleistung sowie bei unterschiedlichen Temperaturen ein definiertes Dämpfungsverhalten erzielbar ist. Dadurch, dass der Mantelspalt an wenigstens einer Seite mit wenigstens einem ersten Kanal eines Steuerblocks verbunden ist, der über wenigstens einen zweiten Kanal mit dem Zylinderinnenraum verbunden ist, wobei der Steuerblock ein Steuerteil zur Steuerung des Durchflusses zwischen dem wenigstens einen ersten Kanal und dem wenigstens einen zweiten Kanal aufweist, ist ein gesteuerter Druckausgleich zwischen Mantelspalt und Zylinderraum ermöglicht, wodurch das Druckverhältnis zwischen dem Mantelspalt und dem Zylinderinnenraum einstellbar ist. Überraschend hat sich gezeigt, dass über die gezielte Verstellung des Druckverhältnisses zwischen dem Mantelspalt und dem Zylinderinnenraum eine Veränderung des Verhaltens des Stoßdämpfers in Zugrichtung (Zugstufe) und Druckrichtung (Druckstufe) erzielbar ist. Die Dämpfungskurve ist somit in Richtung Zug- oder Druckstufe verschiebbar.

Unter dem Begriff "Zylinderraum" ist vorliegend der von dem wenigstens einen Kolben befahrbare und mit Hydrauliköl befüllte Innenraum zu verstehen, der vorliegend durch die wenigstens eine Dämpferhülse begrenzt ist.

In Weiterbildung der Erfindung umfasst der Steuerblock einen Steuertopf, in dessen Wandung der wenigstens eine erste Kanal eingebracht ist und in dessen Boden der wenigstens eine zweite Kanal eingebracht ist, wobei ein Steuerring angeordnet ist, über den der wenigstens eine Kanal stufenlos bereichsweise oder vollständig verschließbar ist. Hierdurch ist eine Steuerung des Druckausgleichs zwischen dem Mantelspalt und dem Zylinderinnenraum durch axiale Verschiebung des Steuerrings ermöglicht. Bevorzugt ist der wenigstens eine erste Kanal und/oder der wenigstens eine zweite Kanal durch eine Bohrung gebildet.

In Ausgestaltung der Erfindung ist der Steuerring topfförmig ausgebildet, wobei dessen Wandung an der Wandung des Steuertopfes geführt ist. Hierdurch ist der Steuerring axial verschiebbar in dem Steuertopf gelagert.

In weiterer Ausgestaltung der Erfindung sind wenigstens zwei erste Kanäle axial versetzt in der Wandung des Steuertopfes angeordnet, wobei der Steuerring in dem Steuertopf axial verschiebbar ist. Hierdurch ist während einer axialen Verschiebung des Steuerrings in dem Steuertopf eine zeitlich versetzte Freigabe der ersten Kanäle erzielt.

In Weiterbildung der Erfindung weist der Steuerring an seiner dem Boden des Steuertopfes zugewandten Unterseite einen zumindest bereichsweise umlaufenden Absatz auf. Hierdurch ist ein Druckausgleichsraum zwischen Mantelspalt und Zylinderinnenraum gebildet.

In Ausgestaltung der Erfindung sind Mittel zur gesteuerten Axialbewegung des Steuerrings angeordnet, die vorzugsweise elektrisch betreibbar sind. Hierdurch ist eine automatische axiale Verstellung des Steuerrings und damit eine automatische Einstellung des Druckverhältnisses zwischen Mantelspalt und Zylinderinnenraum ermöglicht.

In weiterer Ausgestaltung der Erfindung ist ein Federelement angeordnet, über das der Steuerring gegen den Boden des Steuertopfes vorgespannt ist. Hierdurch ist eine Grundposition des Steuerrings erzielt, in welcher der wenigstens eine erste Kanal durch den Steuerring verschlossen ist. Vorteilhaft ist das Federelement durch einen Federring gebildet.

In Weiterbildung der Erfindung umfassen die Mittel zur gesteuerten Axialbewegung des Steuerrings einen Elektromagneten, wobei der Steuerring zumindest bereichsweise ferromagnetisch ausgebildet und über den Elektromagneten in die dem Boden des Steuertopfs entgegengesetzte Richtung bewegbar ist. Durch Ansteuerung des Elektromagneten ist eine der Vorspannrichtung des Federrings entgegengerichtete Krafteinwirkung auf den Steuerring erzielt, wodurch die resultierende auf den Steuerring durch Vorspannung des Federrings einwirkende Kraft stufenlos reduzierbar ist. Hierdurch ist eine feinjustierbare Positionssteuerung des Steuerrings ermöglicht.

In weiterer Ausgestaltung der Erfindung ist an dem und/oder in dem Steuerblock wenigstens ein Sensor zur Erfassung von Temperatur und/oder Druck angeordnet, der über eine Leitung mit einem Steuer- und Regelmodul verbunden ist, das zur Steuerung der Axialbewegung des Steuerrings eingerichtet ist. Hierdurch ist eine Steuerung des Druckausgleichs zwischen dem Mantelspalt und dem Zylinderinnenraum in Abhängigkeit von Druck und/oder Temperatur ermöglicht.

In Weiterbildung der Erfindung umfasst das Steuer- und Regelmodul eine Prozessoreinheit, die eingerichtet ist, aus von dem wenigstens einen Sensor gelieferten Messwerten die Steigung einer aus diesen Werten interpolierten linearen Funktion zu ermitteln. Hierdurch ist eine Steuerung des Druckausgleichs zwischen dem Mantelspalt und dem Zylinderinnenraum auf Basis des Temperatur- oder Druckänderungsverlaufs ermöglicht.

In Ausgestaltung der Erfindung weist die Dämpferhülse wenigstens eine radiale Ausgleichsöffnung auf, über die der Mantelspalt mit dem Zylinderinnenraum verbunden ist. Hierdurch ist ein definierter minimaler Druckausgleich ermöglicht, wodurch ein Vakuumzustand innerhalb des Mantelspaltes vermieden ist. Ein solcher minimaler Druckausgleich kann alternativ auch durch eine entsprechende Gestaltung des Steuerblocks erzielt werden, der dann derart ausgelegt sind, dass der wenigstens eine Verbindungskanal nie vollständig geschlossen ist.

Nach der Erfindung ist wenigstens eine der wenigstens einen Dämpferhülse aus Kunststoff, vorzugsweise aus einem thermoplastischen Kunststoff hergestellt. Durch die Elastizität des Kunststoffes ist eine druckabhängige Vergrößerung des Ringspaltes zwischen Kolben und Dämpferhülse einstellbar.

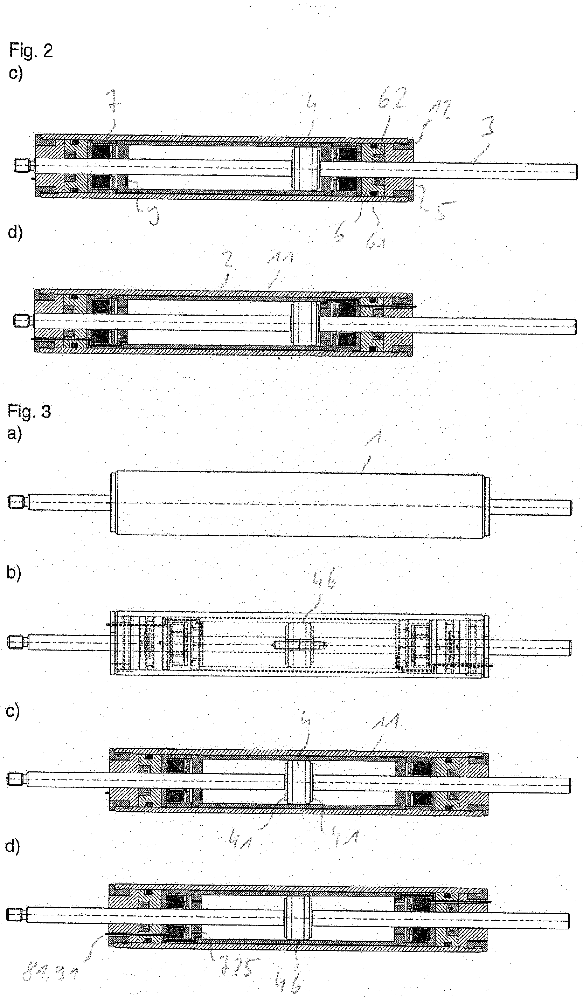

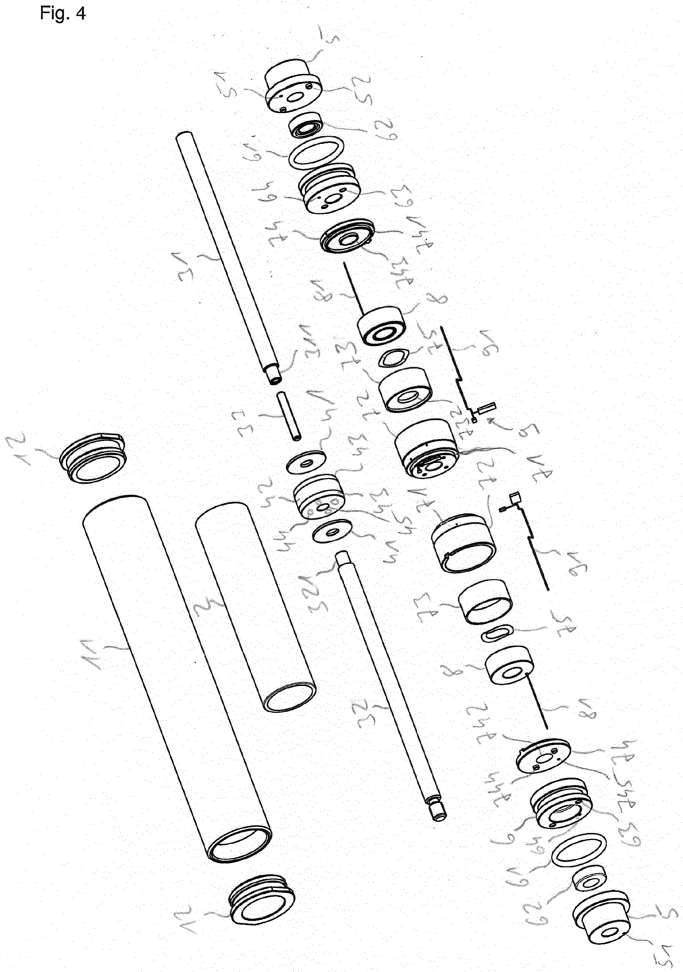

Andere Weiterbildungen und Ausgestaltungen der Erfindung sind in den übrigen Unteransprüchen angegeben. Ausführungsbeispiele sind in den Zeichnungen dargestellt und werden nachfolgend im Einzelnen beschrieben. Dabei kommen gleichen Teilen gleiche Bezugsziffern zu. Es zeigen:
- Figur 1:: die schematische Darstellung eines Stoßdämpfers im ausgefahrenen Zustand
a) in einer Seitenansicht;
b) in einer transparenten Darstellung;
c) im Längsschnitt;
d) um 90° verdreht im Längsschnitt
- Figur 2:: die schematische Darstellung des Stoßdämpfers aus Figur 1 im eingefahrenen Zustand
a) in einer Seitenansicht;
b) in einer transparenten Darstellung;
c) im Längsschnitt;
d) um 90° verdreht im Längsschnitt ;
- Figur 3:: die schematische Darstellung des Stoßdämpfers aus Figur 1 in Mittelstellung
a) in einer Seitenansicht;
b) in einer transparenten Darstellung;
c) im Längsschnitt;
d) um 90° verdreht im Längsschnitt
- Figur 4:: die schematische Darstellung des Stoßdämpfers aus Figur 1 in Explosionsdarstellung;
- Figur 5:: die schematische Darstellung des Stellblocks des Stoßdämpfers aus Figur 1 mit verschlossenen ersten Kanälen
a) im Längsschnitt;
b) um 90° verdreht im Längsschnitt;
- Figur 6:: die schematische Darstellung des Stellblocks des Stoßdämpfers aus Figur 1 mit teilweise freigegebenen ersten Kanälen;
a) im Längsschnitt;
b) um 90° verdreht im Längsschnitt;
- Figur 7:: die schematische Darstellung des Stellblocks des Stoßdämpfers aus Figur 1 mit vollständig freigegebenen ersten Kanälen;
a) im Längsschnitt;
b) um 90° verdreht im Längsschnitt;
- Figur 8:: die Darstellung des Dämpfungsverhaltens des Stoßdämpfers aus Figur 1
a) bei minimaler Öffnungsposition des Steuerrings in Druckstufe und Zugstufe;
b) bei maximaler Öffnungsposition des Steuerrings in Druckstufe und minimaler Öffnungsposition in Zugstufe;
c) bei maximaler Öffnungsposition des Steuerrings in Zugstufe und minimaler Öffnungsposition in Druckstufe;
d) bei maximaler Öffnungsposition des Steuerrings in Druckstufe und Zugstufe.

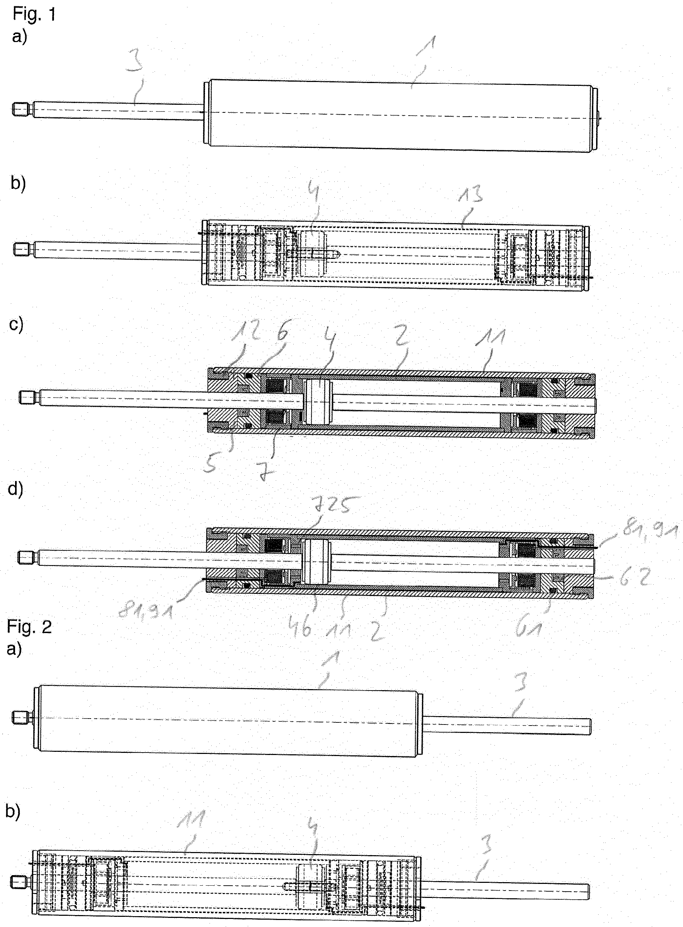

Der als Ausführungsbeispiel gemäß Figur 1 gewählte Stoßdämpfer umfasst einen mit einem Fluid, vorliegend einem Hydrauliköl HVLP 32, gefüllten Zylinder 1, in den eine Dämpferhülse 2 eingebracht ist, durch die eine Kolbenstange 3 verschiebbar geführt ist. Auf der Kolbenstange 3 ist ein Kolben 4 angeordnet, der mit Axialbohrungen 44 versehen ist und auf dessen beiden Seiten eine Verschlussscheibe 41 auf der Kolbenstange 3 axial verschiebbar gelagert ist.

Der Zylinder 1 umfasst ein Zylinderrohr 11, das an beiden Enden jeweils mit einer Kolbenführung 5 verschlossen ist, an die sich ein Dichtungspaket 6 anschließt, das über einen O-Ring 61 gegenüber dem Zylinderrohr 11 abgedichtet ist und das einen hydraulischen Dichtring 62 aufnimmt, über den es gegenüber der axial beweglichen Kolbenstange 3 abgedichtet ist. Die Kolbenführungen 5 sind über ein Verschlussstück 12 axial in dem Zylinderrohr 11 fixiert. An ihrer dem Verschlussstück 12 gegenüberliegenden Seite sind an den Kolbenführungen 5 jeweils zwei Positionierstifte 52 angeordnet, die in zwei hierfür in dem an der jeweiligen Kolbenführung 5 anliegenden Dichtungspaket 6 angeordnete Positionierbohrungen 63 eingreifen. An den beiden Dichtungspaketen 6 liegt jeweils ein Steuerblock 7 an, dessen Deckel 74 mit zwei Positionierstiften versehen ist, die in die Positionierbohrungen 63 des jeweiligen Dichtungspaket 6 eingreifen.

Zwischen den beidseitig angeordneten Steuerblöcken 7 ist die Dämpferhülse 2 in dem Zylinderrohr 11 axial gehalten. Die Dämpferhülse 2 ist dabei jeweils auf einen hierfür an dem jeweiligen Steuerblock 7 angeordneten Absatz 71 aufgeschoben.

Die Dämpferhülse 2 ist im Ausführungsbeispiel aus einem thermoplastischen Kunststoff, vorliegend Polyamid hergestellt. Der Außendurchmesser der Dämpferhülse 2 ist etwa vier Prozent geringer gegenüber dem Innendurchmesser des Zylinderrohres 11, wodurch zwischen dem Zylinderrohr 11 und der Dämpferhülse 2 ein Mantelspalt 13 gebildet ist. Die Dämpferhülse 2 ist so axial fixiert schwimmend in dem Zylinderrohr 11 gehalten.

Die Kolbenstange 3 umfasst zwei Kolbenstangenstücke 31, 32, die über ein Verbindungszylinderstück 33 verschraubt sind. Auf das Verbindungszylinderstück 33 ist der Kolben 4 aufgebracht, der hierzu eine axiale Durchbohrung 45 aufweist, durch die das Verbindungszylinderstück 33 geführt ist. Die beiden Kolbenstangenstücke 31, 32 weisen an ihrem jeweils mit dem Verbindungszylinderstück 33 verschraubten Ende einen durchmesserreduzierten Absatz 311, 321 auf, auf dem jeweils eine Verschlussscheibe 41 axial verschieblich gelagert ist.

Der Kolben 4 weist einen zylindrischen Abschnitt 42 auf, an den sich zu beiden Seiten jeweils ein konisch sich verjüngender Abschnitt 43 anschließt. In dem Kolben 4 sind umlaufend regelmäßig beabstandet zueinander Axialbohrungen 44 eingebracht.

Der Steuerblock 7 umfasst einen Steuertopf 72, mit einem Boden 721, an den sich eine zylindrische Wandung 722 anschließt. In der Wandung 722 sind umlaufende mehrere erste Kanäle 723 eingebracht, die im Ausführungsbeispiel durch Bohrungen gebildet sind und die in Umlaufrichtung in zunehmenden Abständen zum Boden 721 angeordnet sind. Zentrisch in dem Boden 721 ist eine kreisrunde Durchführung 724 für die Kolbenstange 3 vorhanden. Radial beabstandet zu der Durchführung 724 sind in den Boden 721 weiterhin jeweils um 90° zueinander versetzt zweite Kanäle 725 eingebracht, die im Ausführungsbeispiel ebenfalls durch Bohrungen gebildet sind. Radial beabstandet zu einem zweiten Kanal 725 ist in dem Boden 721 eine Sensoraufname 726 angeordnet, die in einen durch die Wandung 722 axial geführten Leitungskanal 727 übergeht.

In den Steuertopf 72 ist ein Steuerring 73 eingesetzt, der eine umlaufende Wandung 731 aufweist und in den eine Durchführung 732 für die Kolbenstange eingebracht ist. Auf seiner der Wandung 731 gegenüberliegenden Unterseite ist an dem Steuerring ein umlaufender Absatz 733 vorhanden, mit dem der Steuerring 73 auf dem Boden 721 des Steuertopfes 72 aufliegt. Der Steuerring 73 ist aus einer ferromagnetischen Legierung hergestellt.

Der Steuertopf 72 ist über einen Deckel 74 verschlossen, der auf seiner dem Steuertopf zugewandten Unterseite einen umlaufenden Steg 741 aufweist, der an der Wandung 722 des Steuertopfes 72 anliegt. Der Deckel 74 ist ebenfalls mit einer zentrischen Durchführung 742 für die Kolbenstange 3 versehen, die mit den Durchführungen 732, 724 von Steuerring 73 und Steuertopf 72 fluchtet. Die Durchführung 742 einrahmend ist auf seiner Unterseite an dem Deckel 74 ein kreisringförmiger Kragen 743 angeordnet. Zwischen dem Steg 741 und dem Kragen 743 ist eine Aufnahme für einen Elektromagneten 8 gebildet, der an dem Deckel 74 befestigt ist. Auf seiner der Unterseite gegenüberliegenden Oberseite sind auf dem Deckel 74 zwei Positionierstifte 744 zum Eingriff in Positionierbohrungen 63 der Dichtungspakete 6 angeordnet.

Weiterhin ist in dem Deckel 74 ein Leitungskanal 745 vorhanden, in dem der Leitungskanal 727 des Steuertopfs 72 mündet, durch den die Anschlussleitung 91 eines in die Sensoraufnahme 726 des Steuertopfes 72 eingebrachten Sensormoduls 9 sowie auch die Anschlussleitung 81 des Elektromagneten 8 geführt sind. Der Leitungskanal 745 mündet in einem durch das an dem Deckel 74 anliegende Dichtungspaket 6 geführten Leitungskanal 64, der in einem durch die Kolbenführung 5 verlaufenden Leitungskanal 51 mündet. Das Sensormodul 9 umfasst im Ausführungsbeispiel einen Drucksensor und einen Temperatursensor.

Bei Bewegung der Kolbenstange 3 in Zugrichtung (Zugbelastung) wird das in dem Zylinder 1 befindliche Hydrauliköl durch den Kolben 4 komprimiert. Hierdurch wird die vor dem Kolben 4 angeordnete Verschlussscheibe 41 gegen den Kolben 4 gepresst, wodurch die in diesem befindlichen Axialbohrungen 44 verschlossen werden. Das Hydrauliköl wird durch den zwischen dem zylindrischen Abschnitt 42 des Kolbens 4 und der Innenwand der Dämpferhülse 2 gebildeten Ringspalt 46 hindurchgepresst. Durch den axial sich in Richtung Verschlussstück 12 verjüngten konischen Abschnitt 43 ist das Einfließen des Hydrauliköls in den Ringspalt 46 unterstützt.

Bei Bewegung der Kolbenstange 3 in Druckrichtung ist der vorstehende Ablauf umgekehrt, wobei das in dem Zylinder 1 befindliche Hydrauliköl nun wiederum durch den Kolben 4 in Bewegungsrichtung komprimiert, wodurch die auf der gegenüberliegenden Seite des Kolbens 4 angeordnete Verschlussscheibe 41 gegen den Kolben 4 gepresst wird und das Hydrauliköl durch den zwischen dem zylindrischen Abschnitt 42 des Kolbens 4 und der Innenwand der Dämpferhülse 2 gebildeten Ringspalt 46 hindurchgepresst wird.

Bei zunehmender Kolbengeschwindigkeit erhöht sich der Druck vor dem Kolben 4 weiter und das komprimierte Hydrauliköl drückt die Dämpferhülse 2 zusätzlich weiter nach außen in den Mantelspalt 13. Der dadurch erweiterte Ringspalt 46 lässt das Hydrauliköl besser abfließen und der Druck vor dem Kolben 4 wird reduziert. Durch den E-Modul Wert des Materials der Dämpferhülse 2 verhält sich diese wie ein Ventil, das bei steigendem Druck vor dem Kolben 4 das Hydrauliköl leichter abfließen lässt und damit die auf den Kolben 4 einwirkenden Druckkräfte einstellt.

Durch die radiale Ausdehnung der Dämpferhülse 2 wird das Volumen des Mantelspalts 13 komprimiert, wodurch der Druck in dem Mantelspalt 13 steigt. Durch die in der Wandung 722 des Steuertopfes 72 geführten ersten Kanäle 723 und die durch den Boden 721 des Steuertopfes 72 geführten zweiten Kanäle 725 ist der Mantelspalt 13 mit dem durch die Dämpfungshülse 2 begrenzten Zylinderinnenraum verbunden. Durch die ersten und zweiten Kanäle 723, 725 kann ein Durchfluss von Hydrauliköl und somit ein Druckausgleich erfolgen. Die Steuerung des Durchflusses erfolgt durch eine axiale Bewegung den an der Wandung 722 des Steuertopfes 71 in diesem geführten Steuerring 73, durch dessen Wandung 731 die in unterschiedlichen Abständen zum Boden 721 des Steuertopfes 72 in dessen Wandung 722 angeordneten ersten Kanäle 723 je nach axialer Position verschlossen oder freigegeben sind.

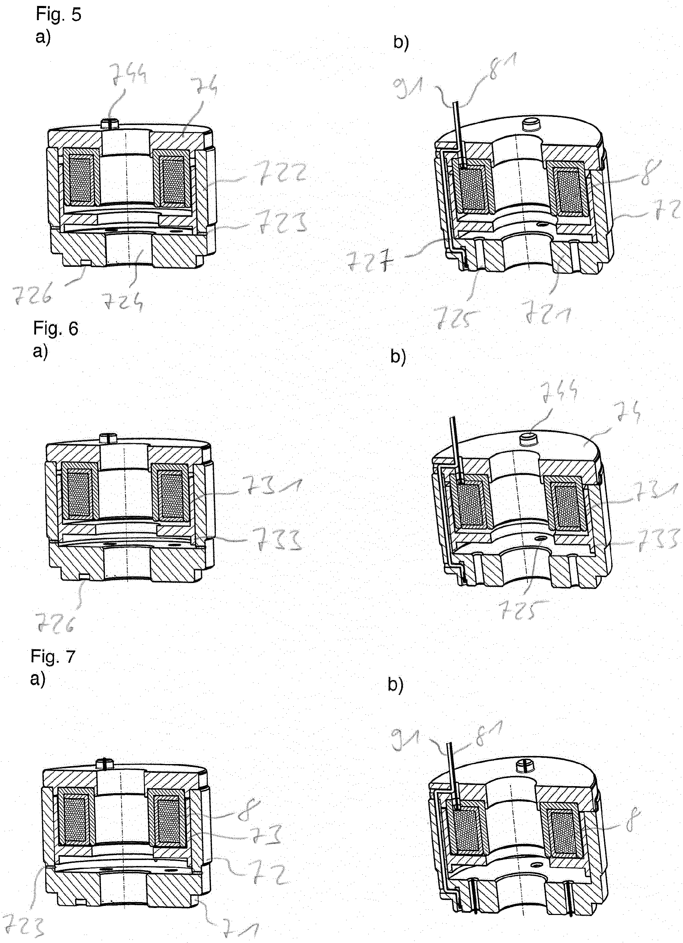

Die axiale Bewegung des aus einer ferromagnetischen Legierung hergestellten Steuerrings 73 erfolgt durch Ansteuerung des Elektromagneten 8. Bei deaktiviertem Elektromagneten liegt der Steuerring 73, der durch einen zwischen diesem und dem Elektromagneten 8 angeordneten Federring 75 gegen den Boden 721 des Steuertopfes 72 vorgespannt ist, mit seinem Absatz 733 an dem Boden 721 an. Die ersten Kanäle 723 sind durch die Wandung 731 des Steuerrings 73 nahezu verschlossen. Durch einen minimalen Durchgang des am nächsten zum Boden 721 des Steuertopfes 72 angeordneten ersten Kanals 723 ist die Bildung eines Vakuums im Mantelspalt verhindert (vgl. Figur 5). Alternativ kann hierzu auch ein minimal durchgängiger Kanal in der Dämpferhülse eingebracht sein.

Durch zunehmende Aktivierung der Elektromagneten 8 wird der Steuerring 73 entgegen der Vorspannung des Federrings 75 axial bewegt, wodurch nacheinander erste Kanäle 723 freigegeben werden (vgl. Figuren 6 und 7). Durch die Anzahl freigegebener erster Kanäle 723 ist der Durchfluss von Hydrauliköl und somit der Druckausgleich einstellbar. Durch axiale Verstellung des Steuerrings 73 kann so die Druckdifferenz zwischen dem Mantelspalt 13 und dem Zylinderinnenraum verstellt werden, wodurch das Ausdehnungsverhalten der Dämpferhülse 2 veränderbar ist.

Im Ausführungsbeispiel sind die beidseitig der Dämpferhülse 2 angeordneten Elektromagneten 8 über ihre Anschlussleitungen 81 mit einer - nicht dargestellten - Steuer- und Regeleinrichtung verbunden, die auch mit den Anschlussleitungen 91 der Sensormodule 9 verbunden ist. Diese Steuer- und Regeleinrichtung umfasst eine Prozessoreinheit, die eingerichtet ist, aus den von den Sensormodulen 9 gelieferten Messwerten die Steigung einer aus diesen Werten interpolierten linearen Funktion zu ermitteln. Auf Basis der so ermittelten Geschwindigkeitswerte der Änderungen von Temperatur und Druck erfolgt anhand eines in der Prozessoreinheit hinterlegten Algorithmus über die Ansteuerung des Elektromagneten 9 die Steuerung des Ausdehnungsverhaltens der Dämpferhülse 2, wodurch eine Verschiebung der Dämpfungskurve in Richtung Druckstufe oder Zugstufe bewirkt ist.

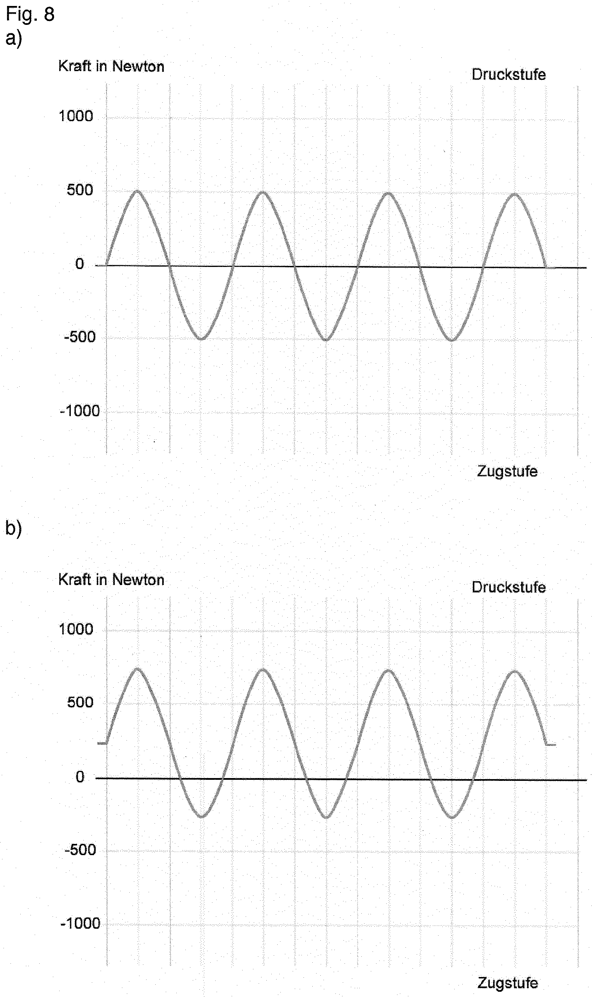

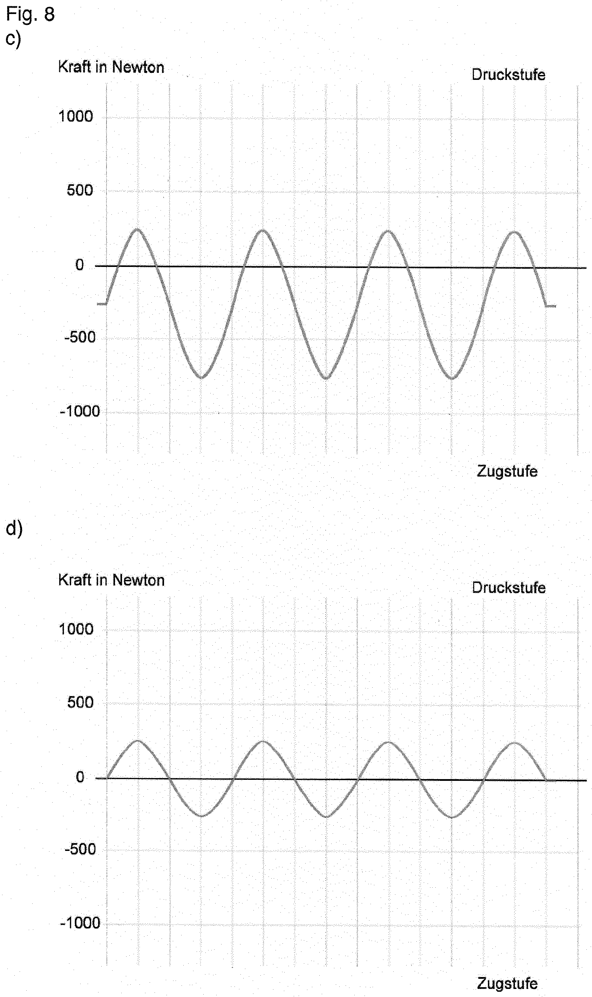

In Figur 8 sind unterschiedliche Dämpfungsverhalten des Stoßdämpfers bei unterschiedlichen Stellungen des Steuerrings 73 gezeigt. Bei minimalem Durchgang zwischen ersten Kanälen 723 und zweiten Kanälen 725, also bei Anlage des Steuerrings 73 an dem Boden 721 des Steuertopfes 72, in Druckstufe und Zugstufe ist die Verbindung zwischen Mantelspalt 13 und Zylinderinnenraum minimal durchlässig; der Druckunterschied zwischen dem Mantelspalt und dem Zylinderraum ist maximal. Die Dämpfung des Stoßdämpfers ist in der Druckstufe und der Zugstufe gleich (vgl. Fig. 8a)).

Wird der Steuerring 73 in der Druckstufe über den Elektromagneten 8 axial in eine Position bewegt, in der die ersten Kanäle 723 in Bezug auf ihren Gesamtquerschnitt mehr geöffnet sind, als in der Zugstufe, verschiebt sich die Dämpfungskurve in Richtung Druckstufe. Die Dämpfung des Stoßdämpfers ist nun in der Druckstufe höher als in der Zugstufe (vgl. Figur 8b)). Entsprechend verschiebt sich die Dämpfungskurve in Richtung Zugstufe, wenn der Steuerring 73 in der Zugstufe in eine Position bewegt wird, in der die ersten Kanäle 723 in Bezug auf ihren Gesamtquerschnitt weiter geöffnet sind, als in der Druckstufe (vgl. Figur 8c)).

Bei maximaler Freigabe aller ersten Kanäle 723 durch den Steuerring 73 in Druckstufe und Zugstufe ist die Verbindung zwischen Mantelspalt 13 und Zylinderinnenraum maximal durchlässig. Es ist ein vollständiger Druckausgleich zwischen Mantelspalt 13 und Zylinderinnenraum gegeben. Die Dämpfung des Stoßdämpfers ist in der Druckstufe und der Zugstufe gleich, jedoch deutlich geringer gegenüber der Stellung der beiden Steuerringe 73 bei Anlage an dem Boden 721 des Steuertopfes 72 mit minimalem Durchgang zwischen ersten Kanälen 723 und zweiten Kanälen 725 gemäß Figur 8a) (vgl. Figur 8d)).

## Patentansprüche

1. Stoßdämpfer, umfassend einen mit einem Fluid befüllten Zylinder (1) und eine in diesem geführten Kolbenstange (3), wobei die Kolbenstange (3) in den Zylinder (1) hinein oder durch ihn hindurchgeführt ist und mit wenigstens einem Kolben (4) versehen ist, wobei in dem Zylinder (1) den wenigstens einen Kolben (4) umgebend wenigstens eine Dämpferhülse (2) angeordnet ist, deren Außendurchmesser kleiner ist, als der Innendurchmesser des Zylinders (1) und deren Innendurchmesser größer ist, als der Außendurchmesser des wenigstens einen Kolbens (4), wodurch zwischen dem wenigstens einen Kolben (4) und der wenigstens einen Dämpferhülse (2) ein Ringspalt (46) gebildet ist und zwischen der wenigstens einen Dämpferhülse (2) und dem Zylinder (1) ein Mantelspalt (13) gebildet ist, wobei der Mantelspalt (13) an wenigstens einer Seite mit wenigstens einem ersten Kanal (723) eines Steuerblocks (7) verbunden ist, der über wenigstens einen zweiten Kanal (725) mit dem Zylinderinnenraum verbunden ist, wobei der Steuerblock (7) ein Steuerteil zur Steuerung des Durchflusses zwischen dem wenigstens einen ersten Kanal (723) und dem wenigstens einen zweiten Kanal (725) aufweist, und **dadurch gekennzeichnet , dass** wenigstens eine der wenigstens einen Dämpferhülse (2) aus Kunststoff, vorzugsweise aus einem thermoplastischen Kunststoff hergestellt ist.

2. Stoßdämpfer nach Anspruch 1, **dadurch gekennzeichnet, dass** der Steuerblock (7) einen Steuertopf (72) umfasst, in dessen Wandung (722) der wenigstens eine erste Kanal (723) eingebracht ist, der vorzugsweise durch eine Bohrung gebildet ist, und in dessen Boden (721) der wenigstens eine zweite Kanal (725) eingebracht ist, der vorzugsweise durch eine Bohrung gebildet ist, wobei ein Steuerring (73) angeordnet ist, über den der wenigstens eine erste Kanal (723) stufenlos bereichsweise oder vollständig verschließbar ist.

3. Stoßdämpfer nach Anspruch 2, **dadurch gekennzeichnet, dass** der Steuerring (73) topfförmig ausgebildet ist, wobei dessen Wandung (731) an der Wandung (722) des Steuertopfes (72) geführt ist.

4. Stoßdämpfer nach Anspruch 2 oder 3, **dadurch gekennzeichnet, dass** wenigstens zwei erste Kanäle (723) axial versetzt in der Wandung (722) des Steuertopfes (72) angeordnet sind, wobei der Steuerring (73) in dem Steuertopf (72) axial verschiebbar ist.

5. Stoßdämpfer nach einem der Ansprüche 2 bis 4, **dadurch gekennzeichnet, dass** der Steuerring (73) an seiner dem Boden (721) des Steuertopfes (72) zugewandten Unterseite einen zumindest bereichsweise umlaufenden Absatz (733) aufweist.

6. Stoßdämpfer nach einem der Ansprüche 2 bis 5, **dadurch gekennzeichnet, dass** Mittel zur gesteuerten Axialbewegung des Steuerrings (73) angeordnet sind, die vorzugsweise elektrisch betreibbar sind.

7. Stoßdämpfer nach einem der Ansprüche 4 bis 6, **dadurch gekennzeichnet, dass** ein Federelement angeordnet ist, über das der Steuerring (73) gegen den Boden (721) des Steuertopfes (72) vorgespannt ist, wobei das Federelement vorzugsweise durch einen Federring (75) gebildet ist.

8. Stoßdämpfer nach Anspruch 6 oder 7, **dadurch gekennzeichnet, dass** die Mittel zur gesteuerten Axialbewegung des Steuerrings einen Elektromagneten (8) umfassen, wobei der Steuerring (73) zumindest bereichsweise ferromagnetisch ausgebildet und über den Elektromagneten (8) in die dem Boden (721) des Steuertopfs (72) entgegengesetzte Richtung bewegbar ist.

9. Stoßdämpfer nach einem der Ansprüche 6 bis 8, **dadurch gekennzeichnet, dass** an dem und/oder in dem Steuerblock (7) wenigstens ein Sensor (9) zur Erfassung von Temperatur und/oder Druck angeordnet ist, der über eine Leitung (91) mit einem Steuer- und Regelmodul verbunden ist, das zur Steuerung der Axialbewegung des Steuerrings (73) eingerichtet ist.

10. Stoßdämpfer nach Anspruch 9, **dadurch gekennzeichnet, dass** das Steuer- und Regelmodul eine Prozessoreinheit umfasst, die eingerichtet ist, aus von dem wenigstens einen Sensor (9) gelieferten Messwerten die Steigung einer aus diesen Werten interpolierten linearen Funktion zu ermitteln.

11. Stoßdämpfer nach einem der vorgenannten Ansprüche, **dadurch gekennzeichnet, dass** die Dämpferhülse (2) wenigstens eine radiale Ausgleichsöffnung aufweist, über die der Mantelspalt (13) mit dem Zylinderinnenraum verbunden ist.

## Claims

1. Shock absorber, comprising a fluid-filled cylinder (1) and a piston rod (3) guided in it, where the piston rod (3) is inserted into or through the cylinder (1) and provided with at least one piston (4), where a damping sleeve (2), the outer diameter of which is smaller than the inner diameter of the cylinder (1) and the inner diameter of which is larger than the outer diameter of the at least one piston (4), that surrounds the at least one piston (4) is arranged in the cylinder (1), which forms a ring gap (46) between the at least one piston (4) and the at least one damping sleeve (2) and a jacket gap (13) between the at least one damping sleeve (2) and the cylinder (1), where the jacket gap (13) is connected to at least a first channel (723) of a control block (7) on at least one side, with the first channel being connected to the inside of the cylinder by at least one second channel (725), where the control block (7) has a control unit to control the flow rate between the at least one first channel (723) and the at least one second channel (725), and **characterised in that** the at least one damping sleeve (2) is made of plastic, preferably of a thermoplastic.

2. Shock absorber in accordance with claim 1, **characterised in that** the control block (7) comprises a control cup (72) with the at least one first channel (723) introduced into its wall (722), preferably formed by a bore, and with the at least one second channel (725) introduced into its bottom (721), preferably formed by a bore, where a control ring (73) is arranged by which the at least one first channel (723) can be smoothly closed in an area or completely.

3. Shock absorber in accordance with claim 2, **characterised in that** the control ring (73) is formed in the shape of a cup, where its wall (731) is guided along the wall (722) of the control cup (72).

4. Shock absorber according to claim 2 or 3, **characterised in that** at least two first channels (723) are arranged in the wall (722) of the control cup (72) with an axial offset, where the control ring (73) can be axially shifted in the control cup (72).

5. Shock absorber according to any one of claims 2 to 4, **characterised in that** the control ring (73) has a circumferential shoulder (733) at least in an area on its bottom side that faces the bottom (721) of the control cup (72).

6. Shock absorber according to any one of claims 2 to 5, **characterised in that** means for controlled axial movement of the control ring (73) are arranged that are preferably electrically operable.

7. Shock absorber according to any one of claims 4 to 6, **characterised in that** a spring element is arranged by which the control ring (73) is pre-loaded against the bottom (721) of the control cup (72), where the spring element is preferably formed by a spring ring (75).

8. Shock absorber according to claim 6 or 7, **characterised in that** the means for controlled axial movement of the control ring comprise an electromagnet (8), where the control ring (73) is formed ferromagnetically at least in an area and can be moved in the direction opposite the bottom (721) of the control cup (72) via the electromagnet (8).

9. Shock absorber according to any one of claims 6 to 8, **characterised in that** at least one sensor (9) is arranged on and/or in the control block (7) to record temperature and/or pressure, the sensor being connected by a line (91) to a control and regulating module that is configured to control the axial movement of the control ring (73).

10. Shock absorber in accordance with claim 9, **characterised in that** the control and regulating module comprises a processor unit that is configured to determine the inclination of a linear function interpolated from the measured values provided by the at least one sensor (9).

11. Shock absorber according to any one of the preceding claims, **characterised in that** the damping sleeve (2) has at least one radial compensation opening by which the jacket gap (13) is connected to the inside of the cylinder.

## Revendications

1. Amortisseur de chocs, comprenant un cylindre (1) rempli de fluide et une tige (3) de piston guidée dans ledit cylindre, sachant que la tige (3) de piston est guidée au cours de sa pénétration dans le cylindre (1), ou de sa traversée de celui-ci, et qu'elle est équipée d'au moins un piston (4), sachant qu'est disposée dans le cylindre (1) au moins une douille (2) d'amortisseur entourant au moins un piston (4), douille dont le diamètre extérieur est inférieur au diamètre intérieur du cylindre (1), et dont le diamètre intérieur est supérieur au diamètre extérieur d'au moins un piston (4), faisant qu'entre au moins un piston (4) et au moins une douille (2) d'amortisseur est formé un interstice annulaire (46) et qu'entre au moins une douille (2) d'amortisseur et le cylindre (1) est formé un interstice enveloppant (13), sachant que l'interstice enveloppant (13) est relié sur au moins un côté avec au moins un premier conduit (723) d'un bloc de commande (7), lequel est relié via au moins un deuxième conduit (725) avec le compartiment intérieur du cylindre, sachant que le bloc de commande (7) présente un élément servant à commander le débit entre au moins un premier conduit (723) et au moins un deuxième conduit (725), et **caractérisé en ce qu'**au moins une douille (2) d'amortisseur est fabriquée en matière plastique, de préférence en une matière plastique thermoplastique.

2. Amortisseur de chocs selon la revendication 1, **caractérisé en ce que** le bloc de commande (7) comprend un fût de commande (72) dans la paroi (722) duquel est ménagé au moins le premier conduit (723), lequel est formé de préférence par un alésage, et dans le fond (721) duquel est ménagé au moins un deuxième conduit (725) qui est formé de préférence par un alésage, sachant qu'est disposée une bague de commande (73) via laquelle il est possible d'obturer au moins le premier conduit (723) progressivement, localement ou entièrement.

3. Amortisseur de chocs selon la revendication 2, **caractérisé en ce que** la bague de commande (73) est en forme de fût, sachant que sa paroi (731) est guidée contre la paroi (722) du fût de commande (72).

4. Amortisseur de chocs selon la revendication 2 ou 3, **caractérisé en ce qu'**au moins deux premier conduits (723) sont disposés décalés axialement dans la paroi (722) du fût de commande (72), sachant que la bague de commande (73) est déplaçable axialement dans le fût de commande (72).

5. Amortisseur de chocs selon l'une des revendications 2 à 4, **caractérisé en ce que** la bague de commande (73) présente, sur le côté inférieur regardant le fond (721) du fût de commande (72), un épaulement (733) au tracé au moins localement périphérique.

6. Amortisseur de chocs selon l'une des revendications 2 à 5, **caractérisé en ce que** des moyens sont disposés pour le mouvement axial piloté de la bague de commande (73), lesquels moyens sont exploitables de préférence électriquement.

7. Amortisseur de chocs selon l'une des revendications 4 à 6, **caractérisé en ce qu'**est disposé un élément ressort via lequel la bague de commande (73) est précontrainte contre le fond (721) du fût de commande (72), sachant que l'élément ressort est formé de préférence par une bague ressort (75).

8. Amortisseur de chocs selon la revendication 6 ou 7, **caractérisé en ce que** les moyens servant au mouvement axial piloté de la bague de commande comprennent un électro-aimant (8), sachant que la bague de commande (73) est configurée ferromagnétique au moins localement et qu'elle est déplaçable via l'électro-aimant (8) dans la direction opposée au fond (721) du fût de commande (72).

9. Amortisseur de chocs selon l'une des revendications 6 à 8, **caractérisé en ce que** contre et/ou dans le bloc de commande (7) est disposé au moins un capteur (9) servant à saisir la température et/ou la pression, lequel capteur est relié via une ligne (91) avec un module de commande et régulation configuré pour piloter le mouvement axial de la bague de commande (73).

10. Amortisseur de chocs selon la revendication 9, **caractérisé en ce que** le module de commande et de régulation comprend une unité à processeur configurée pour déterminer, à partir des valeurs livrées par au moins un capteur (9), la pente d'une fonction linéaire interpolée à partir de ces valeurs.

11. Amortisseur de chocs selon l'une des revendications précédentes, **caractérisé en ce que** la douille (2) d'amortisseur présente au moins un orifice de compensation radial via lequel l'interstice enveloppant (13) est relié avec le compartiment intérieur du cylindre.
